# EUROPEAN PATENT APPLICATION

(11) **EP 1 746 048 A1**
(43) Date of publication of application: **24.01.2007**
(21) Application number: 05380160.1
(22) Date of filing: 18.07.2005
(51) Int. Cl.: B65F 1/00, B65F 1/10, B65F 1/14

(54) **Urban plant for the collection and temporary storage of glass**

(71) Applicant: Técnicas Electronicas Aplicadas Xulio, S.A., 36330 Vigo (Pontevedra) (ES)
(72) Inventor: Gonzalez Alvarez, Julio Cesar, 36330 Vigo (Pontevedra) (ES)
(74) Representative: Temino Ceniceros, Ignacio

(57) **Abstract**

The plant comprises a series of underground bottle banks (1) in a trench (2), whose purpose is to select different types of glass, a machine (5) that breaks the glass containers working in conjunction with those bottle banks (1), which is located on the ground and equipped with a hopper (10) that leads to in inner duct that is provided with the means for crushing those glass containers, together with a keyboard (14) and a touch screen (15) to establish customised communication with each user, equipped with a personal code to enhance recycling, and aforementioned machine (5) supplies a trolley (4) with the crushed glass containers, which are then transported to the correct bottle bank (1).

## Description

### OBJECT OF THE INVENTION

This invention is a small plant for collecting and temporarily storing glass, which is to be placed strategically in towns or villages whose number of inhabitants warrants their presence, so that members of the general public can deposit their glass waste in this plant, and when the containers inside the plant are full, they will be taken away by a vehicle that is suitable for the purpose.

The object of the invention is to obtain a plant that makes it possible to classify the waste glass on the basis of its colour and to crush the waste with a view to reducing to a minimum the amount of room that it takes up, storing each type of glass in its respective container while at the same time controlling its weight so that signals can be activated indicating that one of the containers is full and needs to be emptied.

### BACKGROUND TO THE INVENTION

At present, most of the glass containers that are used to commercialise drinks and other products are " non-returnable", that is to say they are disposable once their contents have been consumed.

Large " bottle banks" specifically for glass are provided on the streets so that these glass containers can be recycled, and users put their glass containers in these bottle banks so that they can be separated from the rest of the rubbish.

The bottle banks are problematic and the problems are basically twofold: their loading capacity and the fact that it is not possible to classify the glass on the basis of the different colours.

As far as the first problem is concerned and given that the complete bottles, jars, etc., are disposed of and very few break as they fall, the glass leaves considerable unfilled spaces inside the bottle bank, mainly the interior of the glass containers themselves, in such a way that a bottle bank of a certain size is capable of actually store an amount of glass in weight, which is considerably less than what it could store if the glass containers were suitably broken. From an economic perspective, this has a negative effect in view of the fact that the process of emptying the bottle bank has to take place relatively frequently, which means an increase in labour charges and the cost of transport.

With respect to the second aspect, and given that glass containers are made of different types and colours of glass, for example transparent, brown, green, blue, etc., the fact that there is a mixture of colours inside the bottle banks means that a selection process has to take place subsequently, and from an economic viewpoint this also has a negative effect.

### DESCRIPTION OF THE INVENTION

The plant for the collection and temporary storage of glass that this invention proposes overcomes the two aforementioned problems in a completely satisfactory way.

With a view to this, the plant concerned takes the form of several bottle banks, arranged in a row, each one of which is set aside for a different type of glass, and a trolley runs parallel to the above-mentioned row, which takes to the bottle banks, the glass that has been crushed beforehand in an external machine, this machine being equipped with a hopper to receive the glass containers and means for breaking them, the hopper being provided with a weighing system that causes it to close when the number of containers deposited inside it exceeds the maximum weight that is envisaged for it to be transported by the trolley to one of the bottle banks.

The aforementioned machine, located on the ground and equipped with its tilting collection hopper to keep it normally in the closed position, at a suitable height to make it easy for people to put the glass containers inside it, is also equipped with a touch screen on the outside to provide information as well as to process the system data and classify it, also giving users an explaining about how to use it, etc, with an electronic agenda for the users to use controlled with a key and a user' s code, a security camera to control not only the entry of the glass but also the person who deposits the glass containers, and another camera pointing towards the bottle bank zone and a door leading to the inside of the machine, which is for maintenance purposes.

The aforementioned camera that controls the entry of the glass will likewise control its colour, after which it will give the necessary orders via a microprocessor to the trolley that will then move to the bottle bank concerned, the microprocessor also receiving information from the hopper weighing system, in such a way that the amount of glass that goes into each one of the bottle banks will be counted so that they can be emptied as soon as they are full.

A communication system that is built into the plant informs a data processing system when any of its bottle banks are full, so that the collection lorry can come to the plant and take the contents away.

The system makes it possible to control who takes part in the recycling process and the conditions in which they do this, so that suitable incentive can be given to the recycling process.

A volume control system also enables the user to control the state of each bottle bank with a view to preventing overloading problems in the event of there being discrepancies between the weight and the volume of the glass.

It is thus possible to make improvements in the conditions under which the glass waste is classified, and it gives a bottle bank of a particular size a fivefold increase in its loading capacity, which, in turn, reduces by the same proportion the number of trips the collection lorry has to make to the temporary storage facilities for the glass in order to take away the contents.

If the glass-breaking machine is shaped like a bottle, this will clearly identify the function of the collection plant, and this will also have a positive effect on its aesthetics where urban landscaping is concerned, whereas the bottle banks themselves will go unnoticed by passers-by, because they will be underground.

### DESCRIPTION OF THE DRAWINGS

With a view to helping to give a better understanding of the characteristics of the invention, in accordance with an example of a preferred embodiment of a practical realisation thereof, the description that is being given is supplemented with a set of drawings that is enclosed and forms an essential part of that description, by way of illustrating it but not in an exhaustive way, the following figures being included:

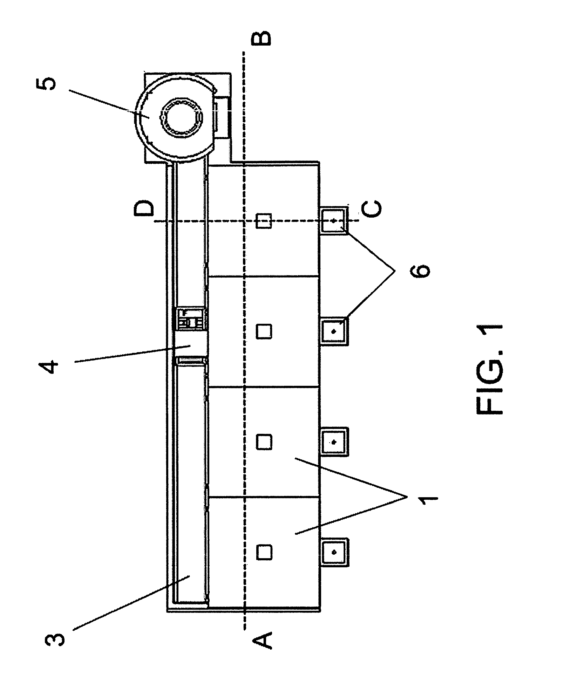

Figure 1.- This shows a plan view diagram of an urban plant for the collection and temporary storage of glass in accordance with the object of this invention.
Figure 2.- This shows a longitudinal section of the same plant as in the preceding figure along the A-B sectioned line of that figure.
Figure 3 .- This shows a cross section of the same assembly as in Figure 1, but now along the C-D sectioned line.

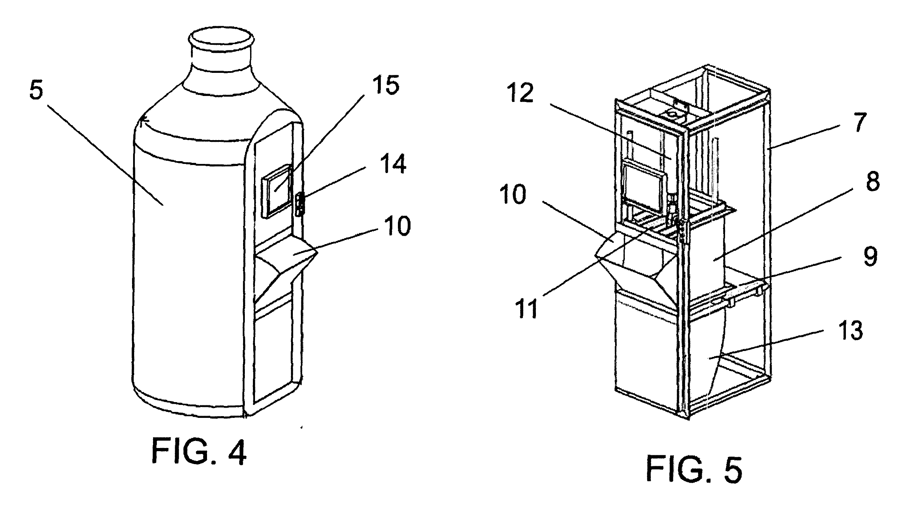

Figure 4.- This view shows the external appearance of the machine that collects and breaks up the glass.
Figure 5.- This shows another perspective view of the same machine, but now without its casing.
Figure 6.- Finally, this figure shows a perspective view of the assembly that is shown in Figure 1, with one of its bottle banks in the process of being extracted.

### REALISATION OF A PREFERRED EMBODIMENT OF THE INVENTION

It can be seen from the figures shown above how the plant proposed by the invention is composed of a series of bottle banks (1) that are buried in a trench (2), arranged in a line and whose number will depend on the amount of types of glass that it has been decided to classify, a lengthways and upper duct (3) being placed together with that row of bottle banks (1), this duct being provided with a rail along which a trolley (4) runs that, properly controlled by a microprocessor, receives the glass waste from a breaking machine (5) and supplies it to the bottle bank (1) concerned.

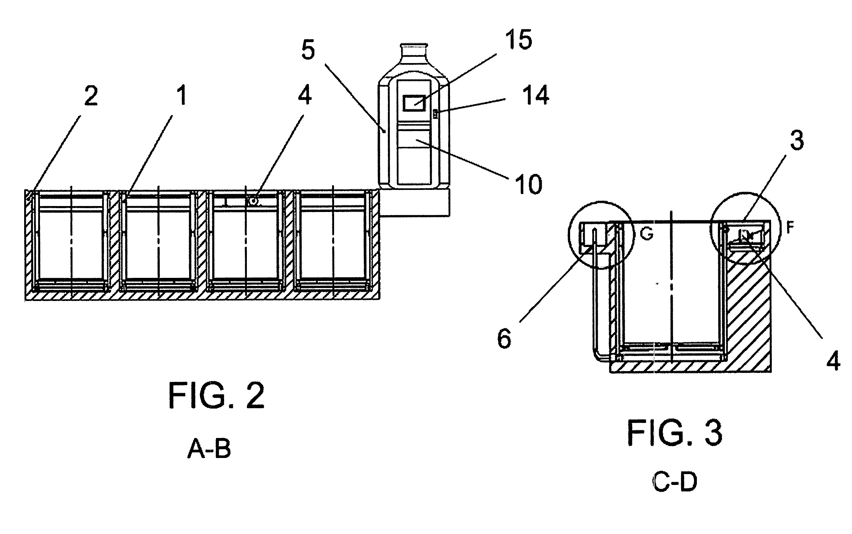

On the opposite side of the trench (2), that is to say, opposite to the duct (3), there is a system (6) for cleaning the trench (2), as can be seen especially in Figure 3.

The machine (5) that breaks the glass containers consists of a casing, which corresponds to reference 5 and is shaped like a bottle, which covers a rigid inner structure (7) that contains a lower duct positioned vertically (8), which is equipped with an inner closing device that is operated by means of hydraulic cylinders (9), duct (8) onto which a tilting frontal hopper (10) flows, where there is also a pounder (11) operated by an upper hydraulic cylinder (12) that is arranged vertically in such a way that the pounder (11) crushes the glass containers that enter the machine through the hopper (10) on the lower closing device of the duct (11), after which the cylinders (9) open inside the aforementioned duct, enabling the glass to drop onto a ramp (13), which places it on the trolley (4).

Communication between the user and the machine (5) is made possible by a keyboard (14) assisted by a touch screen (15), associated with a microprocessor, in such a way that all users, together with their respective keys, can be identified by and are identified by the plant that, via the screen (15), indicates the steps that have to be followed to correctly deposit the glass container in the hopper (10), causes the hopper (10) to open and close, operates the cylinders (9-12) to crush the glass, and moves the trolley (4) loaded with glass to the bottle bank (1) that is meant to store the type of glass concerned.

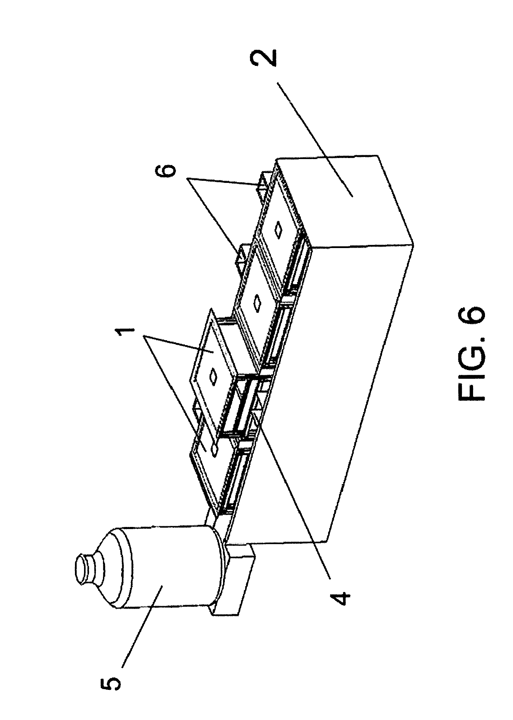

The information about the weights and the type of glass that take place in the machine (5) loading zone are stored in that microprocessor, that is to say on the lower closing device of the duct (8), and when it is detected through that control that one of the bottle banks (1) is full, this information is sent to the central control unit, which gives the required orders for the collection lorry to go to the plant concerned, where the glass will be extracted from the bottle bank or bottle banks until they are empty, as shown in Figure 6.

## Claims

1. ^{st}. - Urban plant for the collection and temporary storage of glass for recycling purposes, designed to be implemented at strategic points in any town or city where the classic bottle banks are located, **characterised by** the fact that it comprises a functional combination for a glass breaking machine (5), located above the ground, and a series of bottle banks (1) under the ground that are aligned in a row to which a trolley (4) can run to collect the broken glass containers from the machine (5) and place them on one of the bottle banks (5), the breaking machine not only being equipment with means for breaking (11) the glass containers but also with means for classifying them, so that the glass containers of each type can be deposited in the correct bottle banks (1).

2. ^{nd}.- Urban plant for the collection and temporary storage of glass for recycling purposes, as in Claim 1, **characterised by** the fact that the machine (5) that breaks the glass containers is equipped with a tilting hopper (10) that leads to a vertical duct (8), in which there is a lower closing device (9) operated by hydraulic cylinders, and a pounder (11) that breaks them, which is operated by vertical hydraulic cylinders (12), a ramp (13) being positioned under the static closing device (9) in the aforementioned duct (8), this ramp taking the broken glass as far as the transporting trolley (4), which slides along a rail in an underground duct (3) until it is next to the bottle banks.

3. ^{rd}.- Urban plant for the collection and temporary storage of glass for recycling purposes, as in the preceding claims, **characterised by** the fact that the machine (5) that receives and breaks the glass containers is equipped with a keyboard (14) and a screen (15) for intercommunication between all users that is customised by means of a code, and a microprocessor that provides the user with the correct orders for handling the machine via the screen (15) and with the aid of a camera controls the different users in order to establish recycling incentives.

4. ^{th}.- Urban plant for the collection and temporary storage of glass for recycling purposes, as in the preceding claims, **characterised by** the fact that the machine (5) that receives the glass containers is equipped with a weighing system in the closing device below the vertical duct (8), which not only limits the amount in weight of glass containers that can be deposited in the hopper (10) but also supplies information to the microprocessor concerning the amount of glass that enters each one of the bottle banks (1), it being envisaged that the microprocessor, which is equipped with a remote communication system, links the plant to a general control centre, with a view to supplying that control centre with information about the weight of the load that is contained in each bottle bank (1), so that the control centre can send the required signals in order that the glass collection lorry can come to the plant and take the contents away when the bottle banks (1) are full.
